# EUROPÄISCHE PATENTANMELDUNG

(11) **EP 1 998 092 A2**
(43) Veröffentlichungstag der Anmeldung: **03.12.2008**
(21) Anmeldenummer: 08104139.4
(22) Anmeldetag: 28.05.2008
(51) Int. Cl.: F16K 31/06

(54) **Elektropneumatisches Ventil, insbesondere Vorsteuerventil eines pneumatischen Wegeventils**

(30) Priorität: 31.05.2007 DE 102007025567
(71) Anmelder: Robert Bosch GmbH, 70442 Stuttgart (DE)
(72) Erfinder: Rose, Jochen, 71701, Schwieberdingen (DE)
(74) Vertreter: Kietzmann, Lutz

(57) **Zusammenfassung**

Elektropneumatisches Ventil, bestehend aus einem Antriebsteil (1), umfassend einen von einer elektrischen Spule (3) mit magnetischen Flussleitmitteln angetriebenen und federrückgestellten Magnetanker (5), sowie einem Ventilteil (2), umfassend zwei koaxial gegenüberliegend angeordnete und abwechselnd von einem über den Magnetanker (5) betätigten Ventilkörper (13) verschließbare Ventilsüze (12a, 12b), die innerhalb einer Ventilgehäuseanordnung ausgebildet sind, an der äußere Druckluftanschlüsse (P, R, A) angeordnet sind, wobei der Magnetanker (5) im dem Ventilteil (2) abgewandten Bereich des Antriebsteils (1) angeordnet ist, eine Betätigungskraft in Richtung des Ventilteils (2) erzeugt und diese über einen unmagnetischen Stößel (6) auf den Ventilkörper (13) leitet, wogegen der Ventilkörper (13) von der gegenüberliegenden Seite her von einer rückstellenden Feder (14) beaufschlagt ist, die bodenseitig des Ventilteils (2) integriert ist.

## Beschreibung

Die vorliegende Erfindung betrifft ein elektropneumatisches Ventil, insbesondere ein Vorsteuerventil eines pneumatischen Wegeventils, bestehend aus einem Antriebsteil, umfassend einen von einer elektrischen Spule mit Flussleitmitteln angetriebenen und federrückgestellten Magnetanker, sowie einem Ventilteil, umfassend zwei koaxial gegenüberliegend angeordnete und abwechselnd von einem über den Magnetanker betätigten Ventilkörper verschließbare Ventilsitze, die innerhalb einer Ventilgehäuseanordnung ausgebildet sind, an der äußere Druckluftanschlüsse angeordnet sind.

Das Einsatzgebiet der vorliegenden Erfindung erstreckt sich vornehmlich auf Vorsteuerventile, welche im Rahmen einer elektropneumatischen Vorsteuerung eines pneumatischen Wegeventils zum Einsatz kommen. Zum Antrieb des meist als Ventilschieber ausgebildeten Ventilgliedes eines pneumatischen Wegeventils liefert das Vorsteuerventil den erforderlichen Vorsteuerdruck. Der Ventilschieber wird beispielsweise mit dem stirnseitig auf diesen einwirkenden Steuerdruck in eine Axialrichtung verstellt. Die Rückstellung in die andere Axialrichtung erfolgt entweder über eine Rückstellfeder - monostabiles Wegeventil - oder über eine zweite Steuerkammer - bistabiles Wegeventil. Das erfindungsgegenständliche elektropneumatische Ventil kann jedoch auch als kleinbauendes Schaltventil für beengte Platzverhältnisse zum Einsatz kommen, beispielsweise als Patronenventil in Zylinderböden von Pneumatikzylindern.

Aus der DE 10 2005 020 278 A1 geht ein gattungsgemäßes elektropneumatisches Ventil hervor. Das Ventil besteht im Prinzip aus zwei koaxial hintereinander liegenden Teilen, nämlich einem Antriebsteil sowie einem Ventilteil. Das Antriebsteil wird im Wesentlichen gebildet durch eine elektrische Spule, die von magnetischen Flussleitmitteln umgeben ist. Die Flussleitmittel bestehen hier aus einem die Spule von außen U-förmig umgreifenden Bügel mit einer im Scheitelpunkt angeordneten Bohrung, in welche der ortsfest zum Bügel angeordnete Magnetkern eingepresst ist. Der Magnetkern ragt in den inneren Spulendurchgang hinein und wirkt an der der Verbindungsstelle zum Bügel gegenüberliegenden Seite mit einem axial bewegbaren Magnetanker zusammen. Zum Schließen des magnetischen Kreises ist ein den Magnetanker unter Wahrung einer Spielpassung umgebendes Joch vorgesehen, welches im Bereich der Schenkelenden im Bereich des U-förmigen Bügels eingepresst ist.

Das Ventilteil des bekannten elektropneumatischen Ventils besteht im Wesentlichen aus einem die äußeren Druckluftanschlüsse P, R und A aufweisenden Ventilgehäuse. Die besagten Druckluftanschlüsse treten dabei in jeweils zugeordnete, und gegeneinander über Dichtringe abgedichtete Ringzonen des Ventilgehäuses aus. Die Ventilmechanik wird gebildet durch einen vom Magnetanker betätigten Ventilkörper, der an mindestens einem Ventilsitz bei Bestromung der elektrischen Spule zur Anlage kommt. Die Offenstellung des Ventilsitzes im nicht-bestromten Zustand der elektrischen Spule wird gewährleistet durch eine rückstellende Feder, welche zwischen dem Joch sowie einem Absatz am Magnetanker im Antriebsteil angeordnet ist.

Nachteilig bei diesem Stand der Technik ist die mechanisch recht aufwendige Fertigung, insbesondere des Antriebsteils. Denn es sind recht viele einzelne Bauteile miteinander zu montieren und zu justieren. Ferner gestaltet sich wegen Platzmangels die Integration einer optionalen Handhilfsbetätigung recht problematisch.

Es ist daher die Aufgabe der vorliegenden Erfindung, ein kleinbauendes elektropneumatisches Ventil zu schaffen, welches einfach herstellbar ist und auf einfache Weise die Unterbringung einer Handhilfsbetätigung ermöglicht.

Die Aufgabe wird ausgehend von einem elektropneumatischen Ventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass der Magnetanker in dem Ventilteil abgewandten Bereich des Antriebsteils angeordnet ist, eine Betätigungskraft in Richtung des Ventilteils erzeugt und diese über einen unmagnetischen Stößel auf den Ventilkörper leitet, wogegen der Ventilkörper von der gegenüberliegenden Seite her von einer rückstellenden Feder beaufschlagt ist, die bodenseitig des Ventilteils integriert ist.

Der Vorteil der erfindungsgemäßen Lösung liegt insbesondere darin, dass sich die rückstellende Feder gemeinsam mit dem Ventilkörper in das Ventilteil des elektropneumatischen Ventils integrieren lässt, und zwar an einer Stelle, an der sowieso der Ventilkörper zu montieren ist. Entsprechend vereinfacht sich die Herstellung des Antriebsteils. Durch den Austausch der Reihenfolge von Magnetkern und Magnetanker gegenüber herkömmlichen Antriebsteilen ist der bewegliche Magnetanker an der dem Ventilteil gegenüberliegenden Seite des Antriebsteils besser zugänglich, so dass sich an dieser Stelle auf einfache Weise eine Art Handhilfsbetätigung anbringen lässt. Eine solche Handhilfsbetätigung stellt eine Art manuelle Notbetätigung des Ventils bei Ausfall der elektrischen Stromversorgung dar. Da diese bei der erfindungsgemäßen Lösung direkt auf den Magnetanker drückend einwirken kann, lässt diese sich durch entsprechende druckknopfartig ausgebildete Mittel in einfacher Weise hinzufügen.

Ist eine Handhilfsbetätigung nicht erwünscht, so wird gemäß einer die Erfindung verbessernden Maßnahme vorgeschlagen, dass Antriebsteil an dem Ventilteil gegenüberliegenden Ende mit einem Deckel zu verschließen, der dem den Magnetanker enthaltenen Ankerraum abdeckt. Wird ein solcher Deckel aus einem flexiblen dünnwandigen, Kunststoffmaterial gefertigt, so lässt sich hiermit im Sinne eine Funktionsintegration gleichzeitig eine Handhilfsbetätigung für den Magnetanker umsetzen.

Um eine 3/2-Ventilfunktion umzusetzen, wird vorgeschlagen, dass die rückstellende Feder derart in das Ventilteil integriert ist, dass diese den Ventilkörper im unbestromten Zustand der elektrischen Spule gegen den dem speisedruckversorgenden Druckluftanschluss P zugeordneten Ventilsitz presst. In diesem Falle ist der gegenüberliegende und dem entlüftenden Druckluftanschluss zugeordnete Ventilsitz geöffnet, so dass der Druckluftanschluss A für eine Arbeitsleitung im Normalzustand entlüftet ist. Es ist jedoch auch denkbar, die erfindungsgemäße Lösung auf Ventile mit anderen Ventilfunktionen, insbesondere einer 2/2-Ventilfunktion zu übertragen. In diesem Falle entfällt ein Druckluftanschluss R für die Entlüftung sowie der dazugehörige Ventilsitz.

Gemäß einer weiteren, die Erfindung verbessernden Maßnahme ist vorgesehen, die Ventilgehäuseanordnung des Ventilteils aus zwei druckfesten und nicht miteinander verbundenen Gehäuseteilen zu bilden. Hierin lassen sich die beweglichen Bauteile Ventilkörper und Feder einlegen, wobei der Ventilkörper vorzugsweise durch eine konusartige Formgebung der einander gegenüberliegenden Ventilsitze geführt ist. Die Feder, welche vorzugsweise nach Art einer spiralförmigen Druckfeder ausgebildet ist, kann koaxial um den bodenseitigen Ventilsitz des Ventilteils angeordnet und durch diesen geführt sein. An je einem Gehäuseteil ist einer der Ventilsitze direkt angeformt.

Die beiden Gehäuseteile können beispielsweise durch Kleben miteinander verbunden werden. Es ist alternativ auch denkbar, beide Gehäuseteile lösbar über eine Schraubverbindung miteinander zu verbinden, was den Vorteil bietet, dass die innenliegenden, bewegbaren Bauteile im Reparaturfall austauschbar sind. Alternativ zur Ausbildung der Feder als spiralförmige Druckfeder ist es auch möglich, diese anders, insbesondere tellerfederartig auszubilden. Die Feder ist derart zu bemessen, dass diese den Ventilkörper mit einer definierten Kraft auf den zugeordneten Ventilsitz drückt, welche ab einer durch das Antriebsteil zu überwindenden Öffnungskraft definiert öffnet.

Die magnetischen Flussleitmittel des erfindungsgemäßen elektropneumatischen Ventils sind vorteilhafterweise auf die erfindungsgemäßen Maßnahmen abgestimmt, in dem diese einen mit dem beweglichen Magnetanker stirnseitig zusammenwirkenden Magnetkern umfassen, welcher mit einem Joch in fester Verbindung steht, um den Magnetfluss zu einem äußeren U-förmigen Flussleitblech weiterzuleiten. Hierdurch wird der Magnetkreis zum beweglichen Magnetanker geschlossen. Alternativ zu einem U-förmigen Flussleitblech kann auch ein topfartiges Flussleitblech oder dergleichen eingesetzt werden. Das Joch besitzt vorzugsweise eine ringscheibenartige Gestalt. In die Bohrung des Jochs lässt sich der Magnetkern bündig mit der Unterseite des Jochs einpressen, um die gewünschte feste Verbindung herzustellen.

Vorzugsweise weist der Magnetkern eine zentrale Längsbohrung zur Hindurchführung des Stößels auf. Der Stößel ist hierin mit wenig Spiel aufgenommen, um eine exakte Führung zu gewährleisten.

Zwischen dem Ventilteil und dem Antriebsteil des erfindungsgemäßen elektropneumatischen Ventils ist weiterhin auch eine Druckabtrennung erforderlich, die verhindert, dass Druckluft aus dem Inneren des Ventilteils über das Antriebsteil an die Umgebung gelangt und/oder die Kraftverhältnisse im Antriebsteil beeinträchtigt. Zu diesem Zwecke wird vorgeschlagen, innerhalb eines zwischen Joch und der Stirnseite des Magnetkerns gebildeten Raums einen Dichtring einzulegen, welcher dynamisch abdichtend am Stößel zur Anlage kommt. Der Dichtring lässt sich an dieser Stelle besonders platzsparend integrieren und auch einfach montieren, da der Magnetkern sowieso fest mit dem Joch zu verbinden ist.

Im Sinne einer möglichst hohen Koaxialität wird vorgeschlagen, dass der unmagnetische Stößel im Bereich des Ventilteils berührungslos durch den benachbarten Ventilsitz ragt, um sich auf den Ventilkörper stirnseitig abzustützen. Die Länge des magnetischen Stößels sollte derart bemessen sein, dass bei angezogenem Magnetanker der Ventilkörper auf dem entlüfteten Ventilsitz aufliegt, jedoch ein Spalt zwischen dem Magnetanker und dem Magnetkern verbleibt. Hierdurch wird vorteilhafterweise ein Aneinanderkleben des Magnetankers am Magnetkern, insbesondere nach langen Stillstandzeiten, auf einfache Weise vermieden.

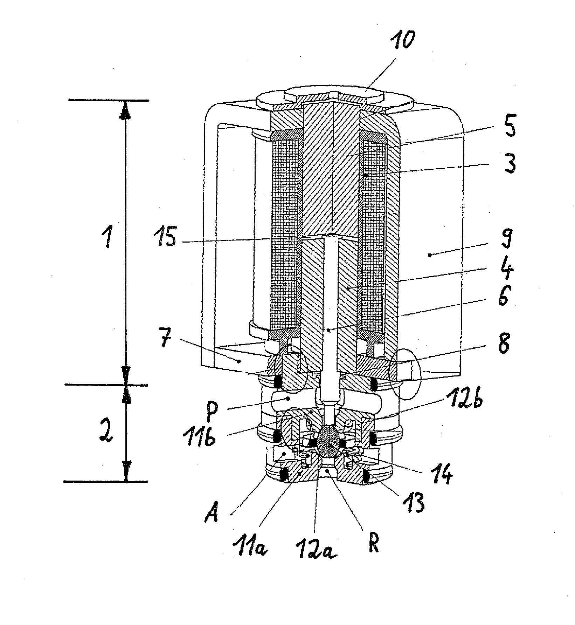

Weitere, die Erfindung verbessernden Maßnahmen werden nachstehend gemeinsam mit der Beschreibung eines bevorzugten Ausführungsbeispiels der Erfindung anhand der einzigen Figur näher dargestellt. Die Figur zeigt einen teilweise Seitenschnitt durch ein elektropneumatisches Ventil, welches hier als Vorsteuerventil ausgebildet ist.

Das elektropneumatische Ventil besteht im Wesentlichen aus einem oberen Antriebsteil 1, an welchem sich koaxial ein unteres Ventilteil 2 anschließt.

Wesentlicher Bestandteil des Antriebsteils 1 ist eine elektrische Spule 3, in deren Innenraum ein Magnetkern 4 als Bestandteil magnetischer Flussleitmittel hineinragt. Der Magnetkern 4 ist hier koaxial und benachbart zum Ventilteil 2 angeordnet und korrespondiert mit einem demgegenüber axial bewegbaren Magnetanker 5. Die vom Magnetanker 5 erzeugte Betätigungskraft wird über einen unmagnetischen Stößel 6 an das Ventilteil 2 weitergeleitet. Zu diesem Zwecke weist der Magnetkern 4 eine koaxiale Bohrung zur Führung des Stößels 6 auf. Der Magnetkern 4 ist seitens des dem Ventilteil 2 zugewandten Endes bündig mit der Unterseite eines Jochs 7 durch Einpressen verbunden.

Zwischen dem Magnetkern 4 und dem Gehäuseteil 11b verbleibt ein Aufnahmeraum zur Unterbringung eines Dichtrings 8. Der Dichtring 8 dient der dynamischen Abdichtung zwischen Antriebsteil 1 und Ventilteil 2, in dem dieser innenradial gegen den unmagnetischen, bewegbaren Stößel 6 zur Anlage kommt.

Einen weiteren Bestandteil der magnetischen Flussleitmittel bildet ein äußeres U-förmiges Flussleitblech 9. Das Flussleitblech 9 leitet die magnetischen Feldlinien vom Joch 7 außen an der Spule weiter, um schließlich den Magnetkreis zum beweglichen Magnetanker 5 hin zu schließen, welcher innerhalb einer Bohrung unter Wahrung einer Spielpassung angeordnet ist.

Das Antriebsteil 1 ist am dem Ventilteil 2 gegenüberliegenden Ende mit einem Deckel 10 verschlossen, um den den Magnetanker 5 enthaltenden Ankerraum der elektrischen Spule 3 zu schützen. An Stelle des Deckels 10 lassen sich an dieser Stelle - nicht weiter dargestellte - Handhilfsbetätigungsmittel zur manuellen Notbetätigung des Ventils anbringen. Diese können dann direkt auf den Magnetanker 5 drückend einwirken. Im einfachsten Falle kann der Deckel 10 aus einem flexiblen Material bestehen und damit ebenfalls die Funktion einer Handhilfsbetätigung wahrnehmen.

Das Ventilteil 2 des elektropneumatischen Ventils ist hier aus zwei druckfesten dicht miteinander verbundenen Gehäuseteilen 11 a und 11 b gebildet, an denen je einer der Ventilsitze 12a bzw. 12b angeformt ist. Im montierten Zustand beherbergen die Gehäuseteile 11 a und 11 b einen abwechselnd auf beide koaxial zueinander angeordneten Ventilsitze 12a und 12b wirkenden Ventilkörper 13. Der Ventilkörper 13 wird von einer Seite her über den unmagnetischen Stößel 6 betätigt, so dass dieser sich entgegen der Kraftwirkung einer gegenüberliegend integrierten Feder 14 vom dem Druckluftanschluss P zur Speisedruckversorgung zugeordneten Ventilsitz 12b abhebt und den gegenüberliegenden Druckluftanschluss R zur Entlüftung schließt. Die rückstellende Feder 14 ist nach Art einer Spiralfeder ausgebildet und bodenseitig des Ventilteils 2 derart integriert, dass diese den dem Druckluftanschluss R zur Entlüftung zugeordneten Ventilsitz 12a koaxial umgibt.

Die Länge des unmagnetischen Stößels 6 ist so bemessen, dass bei angezogenem Magnetanker 5 zwar der Abstand zum Magnetkern 4 hin verkürzt wird, jedoch beide Bauteile nicht gegeneinander zur Anlage kommen, so dass ein Spalt 15 zwischen Magnetanker 5 und Magnetkern 4 verbleibt.

### Bezugszeichenliste

- **1**: Antriebsteil
- **2**: Ventilteil
- **3**: elektrische Spule
- **4**: Magnetkern
- **5**: Magnetanker
- **6**: Stößel
- **7**: Joch
- **8**: Dichtring
- **9**: Flussleitblech
- **10**: Deckel
- **11**: Gehäuseteil
- **12**: Ventilsitz
- **13**: Ventilkörper
- **14**: rückstellende Feder
- **15**: Spalt

## Patentansprüche

1. Elektropneumatisches Ventil, bestehend aus einem Antriebsteil (1), umfassend einen von einer elektrischen Spule (3) mit magnetischen Flussleitmitteln angetriebenen und federrückgestellten Magnetanker (5), sowie einem Ventilteil (2), umfassend zwei koaxial gegenüberliegend angeordnete und abwechselnd von einem über den Magnetanker (5) betätigten Ventilkörper (13) verschließbare Ventilsitze (12a, 12b), die innerhalb einer Ventilgehäuseanordnung ausgebildet sind, an der äußere Druckluftanschlüsse (P, R, A) angeordnet sind,
**dadurch gekennzeichnet, dass** der Magnetanker (5) im dem Ventilteil (2) abgewandten Bereich des Antriebsteils (1) angeordnet ist, eine Betätigungskraft in Richtung des Ventilteils (2) erzeugt und diese über einen unmagnetischen Stößel (6) auf den Ventilkörper (13) leitet, wogegen der Ventilkörper (13) von der gegenüberliegenden Seite her von einer rückstellenden Feder (14) beaufschlagt ist, die bodenseitig des Ventilteils (2) integriert ist.

2. Elektropneumatisches Ventil nach Anspruch 1,
**dadurch gekennzeichnet, dass** das Antriebsteil (1) am dem Ventilteil (2) gegenüberliegenden Ende mit einem Deckel (10) zum Verschließen des den Magnetanker (5) enthaltenden Ankerraums versehen ist.

3. Elektropneumatisches Ventil nach Anspruch 2,
**dadurch gekennzeichnet, dass** der Deckel (10) gegen Handhilfsbetätigungsmittel zur manuellen Notbetätigung des Ventils austauschbar ist, die direkt auf den Magnetanker (5) drückend einwirken.

4. Elektropneumatisches Ventil nach Anspruch 1,
**dadurch gekennzeichnet, dass** die rückstellende Feder (14) den Ventilkörper (13) im unbestromten Zustand der elektrischen Spule (3) gegen den dem speisedruckversorgenden Druckluftanschluss (P) zugeordneten Ventilsitz (12b) presst.

5. Elektropneumatisches Ventil nach Anspruch 1,
**dadurch gekennzeichnet, dass** die Ventilgehäuseanordnung aus zwei druckfesten und dicht miteinander verbundenen Gehäuseteilen (11a, 11b) besteht, an denen je einer der Ventilsitze (12a; 12b) ausgebildet ist und die im montierten Zustand den Ventilkörper (13) sowie die Feder (14) beherbergen.

6. Elektropneumatisches Ventil nach Anspruch 1,
**dadurch gekennzeichnet, dass** die rückstellende Feder (14) aus Stahl besteht und nach Art einer spiralförmigen Druckfeder ausgebildet ist.

7. Elektropneumatisches Ventil nach Anspruch 1,
**dadurch gekennzeichnet, dass** die magnetischen Flussleitmittel einen mit dem beweglichen Magnetanker (5) stirnseitig zusammenwirkenden Magnetkern (4) umfassen, welcher mit einem Joch (7) in fester Verbindung steht, um den Magnetfluss zu einem äußeren U-förmigen Flussleitblech (9) weiterzuleiten, das den Magnetkreis zum beweglichen Magnetanker (5) hin schließt.

8. Elektropneumatisches Ventil nach Anspruch 7,
**dadurch gekennzeichnet, dass** der Magnetkern (4) eine zentrale Längsbohrung zur Hindurchführung des Stößels (6) aufweist und mit dem dem Ventilteil (4) zugewandten Ende bündig mit der Unterseite des Jochs (7) in eine korrespondierende Bohrung des Jochs (7) eingepresst ist.

9. Elektropneumatisches Ventil nach Anspruch 7,
**dadurch gekennzeichnet, dass** innerhalb eines zwischen Gehäuseteil (11b) und der Stirnseite des Magnetkerns (4) gebildeten Raumes ein Dichtring (8) zur dynamischen Abdichtung gegenüber dem Stößel (4) untergebracht ist.

10. Elektropneumatisches Ventil nach Anspruch 1,
**dadurch gekennzeichnet, dass** die Länge des Stößels (6) derart bemessen ist, dass bei angezogenem Magnetanker (5) der Ventilkörper (2) auf dem entlüftenden Ventilsitz (12a) aufliegt, jedoch ein Spalt (15) zwischen dem Magnetanker (5) und dem Magnetkern (4) verbleibt.
